# EUROPEAN PATENT APPLICATION

(11) **EP 0 551 003 A1**
(43) Date of publication of application: **14.07.1993**
(21) Application number: 92311764.2
(22) Date of filing: 23.12.1992
(51) Int. Cl.: G06K 11/18

(54) **Trackerball seal**

(30) Priority: 23.12.1991 GB 9127245
(71) Applicant: COMPUTER KEYBOARD SYSTEMS LIMITED, Welwyn Garden City, Hertfordshire, AL7 1JA (GB)
(72) Inventor: Elgar, James, Royston, Hertfordshire SG8 9EH (GB); Knightley, Mark, Upper Gravenhurst, Beds MK45 4HY (GB); Knightley, John, Welwyn Garden City, Herts AL8 7JU (GB)

(57) **Abstract**

A trackerball with a seal formed as a ring of low friction material housed in a retainer which allows free movement of the ring as the trackerball turns. The ring may be made from felt impregnated with silicon grease and the seal retainer may be integral with the trackerball retainer. Can be used in a mouse or keyboard.

## Description

This invention relates to trackerball and mouse devices and in particular to arrangements for sealing the ball to prevent the ingress of liquids and foreign bodies.

Where trackerballs are used as input devices for computers or video displays, problems are experienced due to the ingress of liquids, dust or grit via the ball or through the small gap between the ball and its retainer. These foreign bodies have a deleterious effect on the smooth operation of the device. It is usual for a retainer to be used to hold the ball in normal use and allow access as required.

The prior art solutions, only partially effective provide a ball manufactured to fine tolerances resting on or pressed against the low friction surface of an aperture. Other solutions include a fixed layer of coated felt adjacent to the aperture for the trackerball, a scraper for cleaning the ball or individual internal protective screens for bearings. The patent specifications EP 392651, GB 2220466 and US 4559532 provide a relevant background.

It is an object of the present invention to provide a simple and effective seal against liquids, dust and grit liable to enter a trackerball device via the ball. The seal has applicability to a mouse and hereafter when a trackerball is mentioned a mouse is also inferred. The invention may be used in some joystick arrangements.

This object is achieved by means of a ring or sheet of material with a circular aperture at or near its centre which admits part of the trackerball. This ring is a sealing ring contained by the trackerball retainer but having freedom of movement within it such that the sealing ring is allowed to float on the surface of the trackerball. Close contact with the trackerball is maintained all around the inside of the circular aperture of the sealing ring. The diameter of the trackerball is greater than the diameter of the circular aperture of the sealing ring. It may be convenient to provide containment means for the sealing ring separate from the trackerball retainer.
Felt cloth impregnated with silicon grease is a suitable material for the sealing ring. Other materials may be used as convenient including various cloth fabrics and composites. All or part of the sealing ring may be made from plastics provided that a low friction contact is made with the trackerball. Preferably the material in the areas contacting the ball should be flexible.
The invention may also be used with the type of device which has the greater part of the trackerball outside the keyboard and retained with the assistance of a housing around part of the ball.
In this case, however, a single sealing ring is likely to be insufficient and a further, possibly modified seal constructed according to the invention would be necessary to protect the interior of the housing. This further seal would require separate containment means within the housing.

One embodiment of the invention will now be described with reference to the drawings in which

Figure 1 is a view of the seal from the inside of a keyboard.

Figure 2 is a cross-sectional view across A-A of figure 1.

Figure 3 is a cross-sectional view across B-B of figure 1.

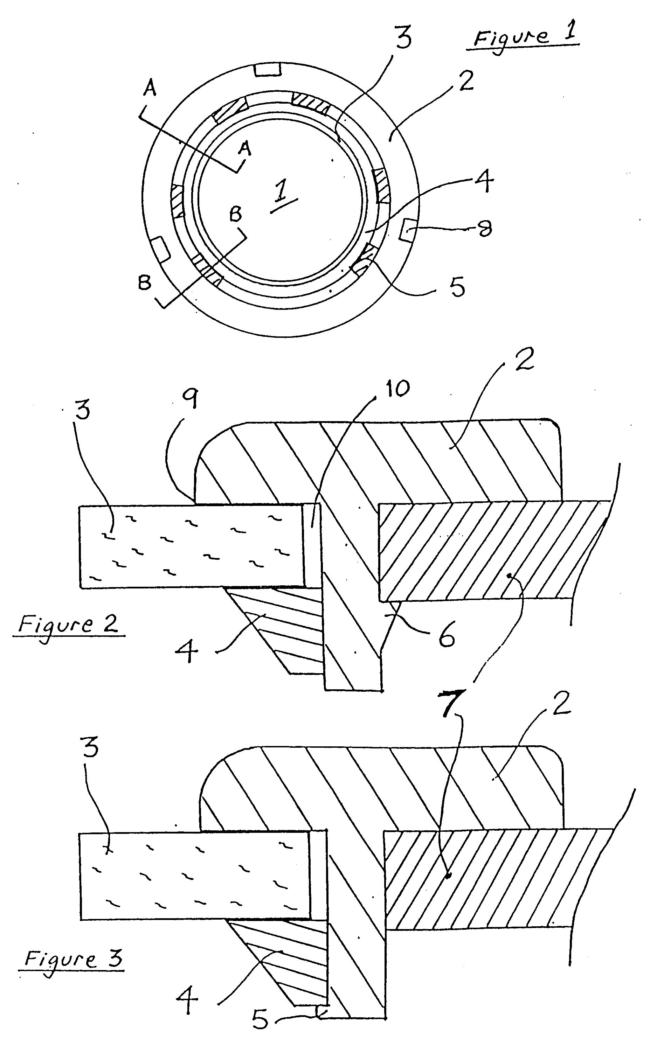

A trackerball (not shown) is retained in a computer keyboard by the retainer ring 2 of internal diameter less than the diameter of the trackerball. The retainer ring 2, of unitary construction and made from nylon is rabbetted to receive the felt sealing ring 3 and the top plate of the keyboard 7. Slight variations in the cross-sectional shape of the retainer ring 2 are shown in the figures. The greater part of the ring has the section shown at figure 2 where the projecting part 6 serves to hold the retainer ring 2 in the top plate 7 of the keyboard. The section of figure 3 has a projecting part 5 which forms a clip for retention of a sealing ring retainer 4. This sealing ring retainer 4 is a nylon ring, of cross-sectional shape as shown in figures 2 and 3, which retains sealing ring 3. In figure 1 those parts of retainer ring 2 forming the clips and having a cross-section as shown in figure 3 are marked by shading. In this arrangement six clips distributed around the ring as shown provide good security for the sealing ring retainer 4 while allowing a firm attachment of the retainer ring 2 to the keyboard section at 7.
With the seal in place the trackerball is admitted into the aperture 1 of the felt ring 3 and is in full contact with it over the whole perimeter of the aperture. The felt ring 3 is free to move and 'float' on the surface of the trackerball. Consequently when the trackerball is moved for the input of data the felt ring 3 remains in contact with the surface of the trackerball and maintains a seal.

The trackerball may not be a true sphere and may have surface irregularities which in the prior art would lead to gaps in any sealing arrangement. Any gaps in the seal provide a pathway for the ingress of dust or liquids. Because of the flexibility of the floating felt ring of the present invention, however, a considerable amount of distortion or surface irregularity in the trackerball can be accommodated. The capillary action at the surface of the felt in contact with the trackerball will tend to hold the contact despite distortions. Dust, grit and liquids are swept from the surface of the trackerball as it turns into the body of the input device.
In this embodiment it has been found that a very small space 9 at the top of the sealing ring 3 and a larger gap 10 at the periphery provides the freedom of movement necessary to maintain the seal.
The felt ring 3 may be removed and replaced very easily as a planned maintenance task simply by removing retaining ring 4 which is held by the flexible clips 5. Preferably the retainer 2 includes the clips 5 and is made from the same slightly flexible material. This confers the advantages of speedy assembly and removal. Small slots 8 of figure 1 are included to ease installation of the retainer 2 into the keyboard.
The invention may be used with trackerballs made from all materials currently used for the purpose e.g. steel, plastic, resin or composites.
The surface of the felt in contact with the trackerball is a low friction surface which does not impede movement of the ball. The ball does itself, however, continue to present a relatively high friction surface to the rollers or other contacting-pick-off devices. Similarly use of the seal does not cause any significant loss of signal or discrimination where optical pick-offs are employed and when the ball has a surface marking pattern.

## Claims

1. A trackerball with an improved seal comprising a sheet of low friction material, of thickness small in relation to its length, with a circular aperture to admit the trackerball, the diameter of said aperture being less than the diameter of the trackerball and the seal characterized by a retainer which houses and locates the sheet over the trackerball and allows freedom of movement of the sheet within the retainer.

2. A trackerball as in claim 1 where the retainer for the seal is part of the trackerball retainer.

3. A trackerball as in claims 1 or 2 where the sheet of low friction material is in the form of a ring

4. A trackerball as in claim 3 where the ring is felt impregnated with silicon grease.

5. A trackerball as in any preceding claim where the trackerball is part of a mouse.

6. A seal as in any of the preceding claims used with a joystick.
